# EUROPÄISCHE PATENTSCHRIFT

(11) **EP 3 441 184 B1**
(45) Veröffentlichungstag und Bekanntmachung des Hinweises auf die Patenterteilung: **27.03.2024**
(21) Anmeldenummer: 18186742.5
(22) Anmeldetag: 01.08.2018
(51) Int. Cl.: B23Q 11/08, E06B 9/17, F16P 3/02

(54) **SCHUTZABDECKUNGSGEHÄUSE**
PROTECTION COVER HOUSING
BOÎTIER DE PROTECTION

(30) Priorität: 07.08.2017 DE 202017104717 U
(43) Veröffentlichungstag der Anmeldung: 13.02.2019
(73) Patentinhaber: HEMA Maschinen- und Apparateschutz GmbH, 63500 Seligenstadt (DE)
(72) Erfinder: BERNIKOV, Konstantin, 63814 Mainaschaff (DE); MAY, Matthias, 63863 Eschau (DE)
(74) Vertreter: Boult Wade Tennant LLP

(56) Entgegenhaltungen:
- DE-U1-202010 016 455
- DE-U1-202010 016 456
- FR-A1- 2 715 432
- FR-A1- 2 781 250

## Beschreibung

Die Erfindung betrifft eine Rollbandabdeckung zur schützenden Abdeckung eines Arbeitsraums einer Maschine gemäß dem Oberbegriff von Anspruch 1. Ferner betrifft die Erfindung ein Verfahren zur Herstellung einer solchen Rollbandabdeckung.

Arbeitsraumabdeckungen trennen Arbeitsräume von Maschinen von der Umgebung ab. Auf diese Weise wird beispielsweise bei der spanenden Bearbeitung von Werkstücken verhindert, dass Späne den Arbeitsraum der Maschine verlassen. Gleichermaßen wird verhindert, dass Objekte in den Arbeitsraum eintreten können. Zudem wird die Sicherheit der Maschine durch solche Abdeckungen erhöht, da der unbeabsichtigte Zugriff durch den Maschinenbediener in den Arbeitsraum während des Betriebs der Maschine durch die Abdeckung verhindert wird.

Damit der Arbeitsraum bei Bedarf abgeschirmt oder etwa bei der Zuführung eines Werkzeugs freigegeben wird, oder der Arbeitsraum zum Beispiel bei Verfahren eines Werkzeugs, Werkstücks oder Verfahrtischs abgedeckt bleibt, muss die Abdeckung des Arbeitsraums verfahrbar sein. Insbesondere bei schnellen Arbeitsabläufen und kurzen Taktzeiten muss das Verfahren der Abdeckung rasch erfolgen.

Um dies zu erreichen, werden unter anderem rolloartige Systeme vorgesehen, die Gehäuse aufweisen, die aus mehreren Gehäuseteilen aufgebaut ist. Der Behang wird hierbei in der Regel innerhalb des Gehäuses auf einer drehbar gelagerten Wickelwelle aufgewickelt.

Zur Verringerung des Platzbedarfs einer solchen Abdeckung ist entsprechend der DE 20 2015 105 214 U1 vorgesehen, ein Rollo ohne ein solches Gehäuse auszubilden.

Weiterhin sind rolloartige Systeme mit Gehäuse beispielsweise durch die Produktlinie "Roller Abdeckungen" des Herstellers HEMA Maschinen- und Apparateschutz GmbH bekannt.

Aus der FR 2 715 432 A1 ist ein Rollladen bekannt, dessen Gehäuse aus Seitenelementen, Verbindungsleisten zum Verbinden der Seitenelemente, Lagerplatten für die Welle, Seitenblenden und Führungsschienenelementen besteht.

Insbesondere bei dem Einsatz von Abdeckungen in Umgebungen, in denen Späne oder sonstige Verschmutzungen die Funktion der Abdeckung beeinträchtigen könnten, ist es angebracht die Abdeckung bzw. eine auf eine Wickelwelle aufgewickelte Abdeckung in einem Gehäuse einzuhausen.

Aus dem vorliegenden Stand der Technik ergibt sich daher die Aufgabe, eine Rollbandabdeckung zur schützenden Abdeckung eines Arbeitsraums einer Maschine vorzusehen, die ein kostengünstig herzustellendes Gehäuse aufweist.

Hauptmerkmale der Erfindung sind im kennzeichnenden Teil von Anspruch 1 angegeben. Ausgestaltungen sind Gegenstand der Ansprüche 2 bis 11. Ferner betrifft die Erfindung gemäß Anspruch 12 ein Verfahren zur Herstellung einer Rollbandabdeckung nach einem der Ansprüche 1 bis 11.

Erfindungsgemäß ist bei einer Rollbandabdeckung zur schützenden Abdeckung eines Arbeitsraums einer Maschine, aufweisend ein Gehäuse, das eine um eine Drehachse gelagerte Wickelwelle mit einem auf der Wickelwelle aufgewickelten Abdeckband einhaust, wobei das Gehäuse mindestens zwei Seitenelemente aufweist, die parallel zu der Drehachse verlaufen und das Gehäuse in Längsrichtung an einem ersten Ende und an einem zweiten Ende der Wickelwelle jeweils ein Stirnelement aufweist, wobei die Seitenelemente durch mindestens ein Verbindungselement verbunden sind, wobei das Verbindungselement über die gesamte Länge der Seitenelemente verläuft, als separates leistenförmiges Teil ausgebildet ist und in Längsrichtung (L) eine durchgängige Querschnittsform aufweist und das mindestens eine Verbindungselement jeweils an einer Längskante des Gehäuses angeordnet ist, die in Längsrichtung (L) verläuft, vorgesehen, dass die Wickelwelle stirnseitig an den Stirnelementen abgestützt ist und das mindestens eine Verbindungselement jeweils an dem Stirnelement eine Ausnehmung zur Aufnahme eines Befestigungsmittels aufweist und das jeweilige Stirnelement an dem jeweiligen Verbindungselement durch das Befestigungsmittel festlegbar ist, wobei die Ausnehmung als Durchgangskanal ausgebildet ist, in den die als Schrauben ausgebildeten Befestigungsmittel von dem Stirnelement aus axial in den Durchgangskanal eingeschraubt sind.

Erfindungsgemäß ist vorgesehen, dass das mindestens eine Verbindungselement jeweils an dem Stirnelement eine Ausnehmung zur Aufnahme eines Befestigungsmittels aufweist und das jeweilige Stirnelement an dem jeweiligen Verbindungselement durch das Befestigungsmittel festlegbar ist. Durch die Abstützung der Wickelwelle direkt an den Stirnelementen wird keine besondere Halterung der Wickelwelle benötigt, was den Herstellungs-, Teile- und Kostenaufwand in der Konfektionierung des Gehäuses und auch der Rollbandabdeckung verringert. Durch eine derartige Festlegung der Stirnelemente ist weiterhin das Gehäuse der Rollbandabdeckung vorteilhaft mittels weniger Befestigungsmittel besonders einfach verbindbar, sodass es, bis auf einen etwaig vorhandenen Schlitz, die Wickelwelle komplett einhaust. So lässt sich das Gehäuse der Rollbandabdeckung besonders einfach herstellen. Die Schraube korrespondiert als Befestigungsmittel mit einer passenden Ausnehmung in dem Verbindungselement. Bevorzugt weist die Ausnehmung hierfür ein Gewinde auf. Alternativ kann die Schraube als selbstschneidende Schraube ausgebildet sein, die in die Ausnehmung des Verbindungselements eingreift. Die Ausnehmung des Verbindungselements ist als Durchgangskanal ausgebildet. Somit liegen an den Stirnseiten Ausnehmungen, die zur Aufnahme von Befestigungsmittel der Stirnelemente geeignet sind. Besonders bevorzugt ist der Durchgangskanal nicht komplett in das Verbindungselement eingebracht, sondern weist in Längsrichtung eine zur Innenseite des Gehäuses hin geöffneten Umfang auf. Durch eine derartige Ausgestaltung wird die Flexibilität des Verbindungselements etwas erhöht, wodurch das Gehäuse toleranter gegen Torsionen oder sonstige Belastungen wird.

In einer Ausgestaltung der Erfindung ist das Gehäuse steckbar ausgestaltet. Bevorzugt ist das Verbindungselement an einer Längskante des Gehäuses angeordnet, die parallel zu der Drehachse der Wickelwelle verläuft.

Hieraus ergibt sich der Vorteil, dass das Gehäuse der Rollbandabdeckung besonders einfach zusammenzusetzen ist. Die Seitenelemente sind durch die Verbindungselemente miteinander verbindbar, sodass das Gehäuse in Richtung der Längsachse bzw. der Drehachse der Wickelwelle die Wickelwelle umreicht. Von besonderem Vorteil ist, dass das Gehäuse im Wesentlichen nur aus drei Komponenten besteht, nämlich den Seitenelementen, den Verbindungselementen und den Stirnelementen. Für den Fall, dass Gehäuse nach Bedarf konfektioniert werden, ergibt sich hieraus der weitere Vorteil, dass nur diese drei Elemente bearbeitet bzw. hergestellt werden müssen. Zudem ist die Lagerhaltung gering, da immer auf die gleichen Komponenten zugegriffen werden kann. Insbesondere die Seitenelemente und Stirnelemente sind hierbei besonders einfach herstellbar. So gestaltet sich das Gehäuse der Rollbandabdeckung vorteilhaft, da es durch die Einfachheit seiner formgebenden Komponenten ad-hoc für den jeweiligen Anwendungsfall hinsichtlich seiner Abmessungen und damit seines Raumbedarfs konfektionierbar ist. Insbesondere bei der Nachrüstung von Schutzabdeckungen für Arbeitsräume bereits vorhandener Maschinen ist dies von Vorteil, da die Abmessungen durch die vorhandene Maschine vorgegeben sind und die Einbaumaße von solchen Schutzabdeckungen keiner standardisierten Bemaßung unterliegen. Außerdem lassen sich mit einem derartigen Gehäuse versehene Rollbandabdeckungen sehr genau in die Maschinen einpassen.

In einer weiteren bevorzugten Ausführungsform weist das Verbindungselement einen im Wesentlichen rechten Winkel zwischen den zu verbindenden Seitenelementen auf. Alternativ sind auch beliebige andere Winkel denkbar. Durch das Vorsehen rechter Winkel ergibt sich für das Gehäuse der Rollbandabdeckung in vorteilhafter Weise eine besonders regelmäßige Bauform, die sich in bestehende Anlagen leicht integrieren lässt. Außerdem ist es möglich, dass stumpfe Winkel in dem Verbindungselement zwischen den Seitenelementen vorgesehen werden. So sind Gehäusebauformen, beispielsweise mit sechseckigem oder achteckigem Querschnitt realisierbar, die vorteilhaft einen besonders geringen Raumbedarf aufweisen, da sie die Wickelwelle mit dem Abdeckband eng umhausen.

Vorzugsweise ist das Verbindungselement mittels Extrusionsverfahren hergestellt. Hierdurch ergibt sich der Vorteil, dass das Verbindungselement mittels besonders kostengünstiger Verfahren in einer besonders hohen Qualität herstellbar ist.

In einer vorteilhaften Ausgestaltung weist das Verbindungselement einen durchgängigen Querschnitt in einer Richtung senkrecht zur Längsrichtung auf. Dies ist insbesondere in Verbindung mit der Herstellung mittels Extrusionsverfahren von Vorteil, da bei der Herstellung durchgängig eine formgebende Matrize verwendet werden kann. Auf diese Weise liegt ein Ausgangsmaterial für das Verbindungselement in großer Länge vor. Außerdem ergibt sich der Vorteil, dass das Verbindungselement besonders günstig herstellbar ist. Bevorzugt ist das Verbindungselement ein Zuschnitt aus einem in großer Länge vorliegenden Material. Dementsprechend ist das Verbindungselement gut konfektionierbar. Dies gestaltet sich hinsichtlich der Herstellkosten vorteilhaft, da so ein besonders geringer Verschnitt anfällt. Außerdem ist auf diese Weise das Gehäuse der Rollbandabdeckung kostengünstig herstellbar, das in einem hohen Grad an die vorhandenen Gegebenheiten zum Einbau des Gehäuses, etwa zur Verfügung stehende Abmessungen an der Maschine, adaptiert werden kann. Besonders bevorzugt ist das Verbindungselement aus Kunststoff. Die Verwendung von Kunststoff als Material für das Verbindungselement ist vorteilhaft, da Kunststoff besonders leicht, insbesondere mittels Extrusionsverfahren, in die gewünschte Form gebracht werden kann.

Eine wichtige Ausgestaltung sieht vor, dass das Verbindungselement über die gesamte Länge der Seitenelemente verläuft. Hierdurch ergibt sich der Vorteil, dass das Verbindungselement über einen besonders großen Bereich mit den Seitenelementen in Verbindung steht. Die Zuverlässigkeit der Verbindung wird dadurch erhöht.

In einer bevorzugten Ausgestaltung ist vorgesehen, dass das Verbindungselement zwei Aufnahmen für die Seitenelemente aufweist. Weiterhin weist das Verbindungselement einen zwischen zwei Schenkel liegenden Winkel auf, insbesondere ist das Verbindungselement L-förmig ausgestaltet. Gemäß einer Ausgestaltung sind die Seitenelemente in die Aufnahmen einsteckbar, wobei die Seitenelemente in den Schenkel liegenden Aufnahmen nur über einen Teil der Länge der Schenkel hineinragen. Durch die Aufnahmen für die Seitenteile wird die Zuverlässigkeit der Verbindung weiter erhöht. Insbesondere dann, wenn die Aufnahmen gemäß einer Ausführungsform als Vertiefungen ausgebildet sind. Bevorzugt sind diese Vertiefungen als Nuten ausgebildet.

Weiterhin kann das Verbindungselement derart ausgestaltet sein, dass die Aufnahmen unterschiedliche Winkelpositionen der in die Aufnahmen eingesteckten Seitenteile untereinander ermöglicht. Alternativ oder zusätzlich kann das Verbindungselement weitere Aufnahmen für die Seitenelemente aufweisen, durch die alternative Winkelpositionen der Seitenteile zueinander erreichbar sind. Durch eine derartige Ausgestaltung der Aufnahmen ergibt sich der Vorteil, dass sich der Außenumfang des Gehäuses besonders leicht anpassen lässt, ohne, dass für eine bestimmte Ausgestaltung des Außenumfangs des Gehäuses auch ein entsprechend ausgestaltetes Verbindungselement vorgesehen sein muss.

Bei einer Ausbildung der Aufnahmen des Verbindungselements als Nuten ergibt sich der Vorteil, dass die Seitenelemente im Feder/Nut-Prinzip in die Nut eingreifen. Hierdurch ist in einer bevorzugten Ausführungsform eine Presspassung und/oder ein Kraftschluss zwischen den Verbindungselementen und den in die Aufnahme eingesetzten Seitenelementen herstellbar.

Man erkennt, dass die Seitenelemente Profile und/oder Platten sind. Vorzugsweise sind die Profile und/oder Platten als Standardteile, beispielsweise als Bleche oder Paneele oder für den Fall von Profilen als U-Profile oder L-profile ausgebildet. In einer weiteren bevorzugten Ausführungsform sind die Seitenelemente solchen Standardteilen zugeschnitten. Dies gestaltet sich, analog zu dem in großer Länge vorliegenden Material für die Verbindungselemente, vorteilhaft, da als Halbzeug vorhandene Standardteile durch Zuschnitt leicht und mit wenig Schnittverlust in eine für das Gehäuse geeignete Form bringbar sind.

In einer konstruktiv günstigen Variante ist dabei vorgesehen, dass das Gehäuse der Rollbandabdeckung drei Verbindungselemente und vier Seitenelemente aufweist. In einer alternativen Ausgestaltung können die Seitenelemente ebenfalls als U-Profile oder L-Profile ausgestaltet sein. Ebenso kann alternativ vorgesehen sein, dass Profile und Platten als Seitenelemente gemischt und entsprechend mittels Verbindungselementen verbunden werden. Etwa eine Platte und ein U-Profil oder zwei Platten und ein L-Profil. Gleichermaßen ist denkbar, dass zwei Profile, etwa zwei L-Profile durch mindestens ein Verbindungselement miteinander verbunden werden. Durch die Verbindung von zugeschnittenen Standardteilen mittels der Verbindungselemente lassen sich die Herstellkosten von der erfindungsgemäßen Rollbandabdeckung mit dem Gehäuse reduzieren, da keine speziell für das Gehäuse ausgeformten Seitenelemente hergestellt werden müssen. Das Material für die Seitenelemente kann aus Metall oder alternativ aus Kunststoff bestehen. Durch die Wahl von Kunststoff wird erreicht, dass das Gehäuse korrosionsbeständig ist und das Gewicht des Gehäuses gleichzeitig reduziert wird. Bei einer Ausgestaltung der Seitenelemente aus Metall wird ein besonders robustes Gehäuse erreicht, das durch die Wahl eines geeigneten Metalls, etwa Aluminium oder Edelstahl, weitestgehend korrosionsfest ist.

Ferner ist gemäß einer Ausgestaltung der Erfindung vorgesehen, dass die Stirnelemente Platten sind. Auf diese Weise werden die Herstellkosten für die Rollbandabdeckung mit dem Gehäuse aus den oben dargelegten Erwägungen weiter gesenkt. Vorzugsweise können die Stirnelemente verschiedene Formen aufweisen. Insbesondere gestaltet es sich vorteilhaft, wenn die Form der Stirnelemente im Wesentlichen dem Querschnitt des Gehäuses entspricht. Dadurch ist die Rollbandabdeckung platzsparend ausgestaltbar. Bevorzugt können die Stirnelemente Kuppelgeometrien aufweisen, die mit Verbindungselementen einer Maschine zur Montage der Rollbandabdeckung in Eingriff bringbar sind.

In einer Weiterbildung ist vorgesehen, dass an zumindest einer in Längsrichtung des Gehäuses verlaufenden Längskante kein Verbindungselement vorgesehen ist, wodurch an dieser Längskante ein Schlitz zur Durchführung eines Abdeckbands ausgebildet ist. Alternativ kann vorgesehen sein, dass in einem Seitenelement ein Schlitz vorgesehen ist, wobei dieser Schlitz nicht an einer Längskante des Gehäuses liegt.

Durch das Weglassen eines Verbindungselements an einer Längskante des Gehäuses bzw. durch das Ausbilden eines Schlitzes in einem Seitenelement wird auf einfache Weise eine Öffnung für das Abdeckband geschaffen. Der so hergestellte Schlitz beeinträchtigt die Stabilität des Gehäuses der Rollbandabdeckung nicht, da die Seitenelemente mittels der vorhandenen Verbindungselemente miteinander verbunden sind, sodass das Gehäuse der Rollbandabdeckung die Wickelwelle bis auf den Schlitz vollständig umreicht. Hieraus ergibt sich der Vorteil, dass das Abdeckband kann an jeder beliebigen Stelle am Umfang des Gehäuses herausgeführt werden. Für den Fall, dass das Abdeckband in einem Seitenelement herausgeführt wird, müssen an jeder Längskante die Verbindungselemente vorhanden sein. In einer weiteren Ausgestaltung kann das Verbindungselement an der Längskante, an der das Abdeckband herausgeführt wird, einen Schlitz aufweisen. Ebenso kann das Verbindungselement selbst einen Schlitz zur Durchführung des Abdeckbands aufweisen.

In einer Ausbildung ist vorgesehen, dass an zumindest einem dem Schlitz benachbarten Seitenelement ein Abstreifer angebracht ist. Bevorzugt ist der Abstreifer mit Befestigungsmitteln mit den Seitenelementen und/oder den Verbindungselementen verbunden. Vorzugsweise setzt der Abstreifer das Seitenelement oder das Verbindungselement fort. In einer bevorzugten Ausführungsform ist der Abstreifer in Richtung des Schlitzes geneigt. Nach einer weiteren bevorzugten Ausgestaltung ist vorgesehen, dass Abstreifer bevorzugt an beiden, dem Schlitz benachbarten, Seitenelementen bzw. Außenkanten des Verbindungselements angeordnet sind. Nach einer näheren Ausgestaltung ist vorgesehen, dass die Abstreifer gegeneinander eine Vorspannung aufweisen. Durch das Vorsehen von Abstreifern wird in vorteilhafter Weise verhindert, dass Späne oder sonstige Verunreinigungen, die sich auf der Außen- oder Innenseite des Abdeckbands befinden könnten, in das Gehäuse der Rollbandabdeckung gelangen. Insbesondere durch eine Vorspannung der Abstreifer gegeneinander oder jeweils gegen das Abdeckband ist eine gute Abstreifwirkung erreichbar. Zudem kann so die Stabilität des Gehäuses im Bereich der Abstreifer erhöht werden. In einer besonders bevorzugten Ausführungsform ist der Abstreifer mittels Extrusionsverfahren hergestellt. Für den Abstreifer ergeben sich dann ebenfalls die oben für die Verbindungselemente beschriebenen Vorteile.

Eine weitere optionale konstruktive Maßnahme sieht vor, dass das Abdeckband als Behang ausgebildet ist. Dadurch lässt sich das Abdeckband aufwickeln, wodurch sich der Vorteil der Platzersparnis ergibt. Das Gehäuse der Rollbandabdeckung kann dadurch entsprechend klein dimensioniert werden.

Für einen verbesserten Schutz des Arbeitsraums ist vorgesehen, dass das Abdeckband Gliederelemente aufweist. Durch Gliederelemente, insbesondere Gliederelemente aus Metall ergibt sich eine bessere Schutzwirkung des Abdeckbands. Die Gliederelemente können sowohl auf der Innenseite, also der dem Arbeitsraum zugewandten Seite des Abdeckbands, als auch auf der Außenseite des Abdeckbands angeordnet sein. Alternativ kann das Abdeckband aus den Gliederelementen bestehen.

Nach einer weiteren Ausgestaltung weist das Abdeckband Lamellen auf. Bevorzugt sind die Lamellen in Umfangsrichtung der Wickelwelle gebogen. Lamellen erhöhen die Schutzwirkung des Abdeckbands und lassen sich bei einer gebogenen Ausgestaltung vorteilhaft platzsparend auf die Wickelwelle aufwickeln.

Gemäß einer Weiterbildung der Erfindung ist vorgesehen, dass zumindest ein Seitenelement mit zumindest einem Verbindungselement durch mindestens ein Verbindungsmittel verbunden ist. Als Verbindungsmittel sind vorgesehen. Hierdurch wird die Stabilität des Gehäuses der Rollbandabdeckung in Längsrichtung insbesondere bei langen Bauformen in vorteilhafter Weise erhöht.

Durch das Verbinden der Stirnelemente an mindestens einer Stelle mit mindestens einem Verbindungselement wird darüber hinaus die Stabilität des Gehäuses der Rollbandabdeckung erhöht, da auf die Seitenelemente wirkende Lasten über die Verbindungselemente auf die Seitenelemente verteilt werden.

Eine wichtige Weiterbildung der Erfindung besteht darin, dass die mindestens zwei Seitenelemente stirnseitig Ausformungen aufweisen, die mit Aussparungen in den Stirnelementen korrespondieren. Die Ausformungen liegen bevorzugt in einem Kantenbereich des Seitenelements an dem kein Verbindungselement vorhanden ist. Auf diese Weise wird vorteilhaft die Stabilität des Gehäuses erhöht.

In einer bevorzugten Ausführungsform ist die Wickelwelle durch einen außerhalb des Gehäuses angeordneten Motor angetrieben, wobei eine Antriebswelle der Wickelwelle eine Stirnwand durchragt. Gemäß einer alternativen Ausführungsform ist innerhalb der Wickelwelle ein Rohrmotor angeordnet, der die Wickelwelle antreibt. Das während des Verfahrens des Abdeckbands entstehende Drehmoment wird durch mindestens eine Stirnwand aufgenommen.

In einer Weiterbildung der Erfindung ist vorgesehen, dass die Stirnelemente jeweils eine Befestigungsmöglichkeit aufweisen. Ferner ist gemäß einer Ausgestaltung der Erfindung vorgesehen, dass an der Außenseite des Gehäuses Montagewinkel vorhanden sind. Bevorzugt sind diese Montagewinkel durch Befestigungsmittel, insbesondere Nieten an dem Verbindungselement und/oder Seitenelement befestigt. Durch die vielfältigen Befestigungs- und Montagemöglichkeiten ergibt sich der Vorteil, dass das Gehäuse und somit die Rollbandabdeckung flexibel an Maschinen montierbar ist.

Außerdem betrifft die Erfindung ein Verfahren zur Herstellung einer Rollbandabdeckung, wobei
- die mindestens zwei Seitenelemente und das mindestens eine Verbindungselement auf eine gewünschte Länge der Rollbandabdeckung gebracht werden,
- die Seitenelemente mit dem Verbindungselement in Eingriff gebracht werden,
- die Stirnelemente jeweils mit dem Verbindungselement verbunden werden,
wobei erfindungsgemäß Schrauben durch Öffnungen in den Seitenelementen in eine als Durchgangskanal ausgebildete Ausnehmung axial eingeschraubt werden.

Durch das Verfahren ergibt sich der Vorteil, dass das Gehäuse der Rollbandabdeckung an Abmessungen und räumliche Vorgaben der Maschine, deren Arbeitsraum abzudecken ist, anpassbar ist. Die Verbindungselemente sind derart standardisierbar, dass deren Form entsprechend der Winkel von zwei Seitenelementen zueinander vorkonfektionierbar ist. Beispielsweise können Verbindungselemente mit Winkeln von in etwa 60°, 90°, 120° und 180° vorgesehen sein. Diese vorkonfektionierten Verbindungselemente sind je nach Bedarf kürzbar.

Eine entsprechende Auswahl von Seitenelementen, die ebenfalls leicht hinsichtlich ihrer Dimensionen anpassbar sind, stellt in Verbindung mit den Verbindungselementen in besonders vorteilhafter Weise eine nahezu unbegrenzte Adaptierbarkeit an die vorhandenen Gegebenheiten her. Als Ausgangsmaterial für die Seitenelemente kann beispielsweise plattenartiges Material verwendet werden, das entlang einer ersten und/oder einer zweiten Richtung beschnitten werden kann. So ergibt sich der Vorteil, dass die Seitenelemente nicht in allen erdenklichen Größen bzw. Zuschnitten auf Lager vorgehalten werden müssen.

Zudem kann für das Verfahren vorgesehen sein, dass die Seitenelemente in dem Verbindungselement in die gewünschte Winkelstellung gebracht werden.

In einer näheren Ausgestaltung des Verfahrens kann vorgesehen sein, dass die Wickelwelle im Inneren des Gehäuses angeordnet und an den Stirnelementen abgestützt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische, perspektivische Ansicht der Rollbandabdeckung,
- Fig. 2: zeigt die schematische, perspektivische Ansicht der Rollbandabdeckung nach Fig. 1 in einer geschnittenen Ansicht,
- Fig. 3: eine schematische Ansicht der ersten, bezogen auf Fig. 1, linken Seite der Rollbandabdeckung,
- Fig. 4: eine schematische Ansicht der zweiten, bezogen auf Fig. 1, rechten Seite der Rollbandabdeckung,
- Fig. 5: eine schematische Ansicht einer Vorderseite der Rollbandabdeckung und
- Fig. 6: eine schematische Ansicht einer Rückseite der Rollbandabdeckung.

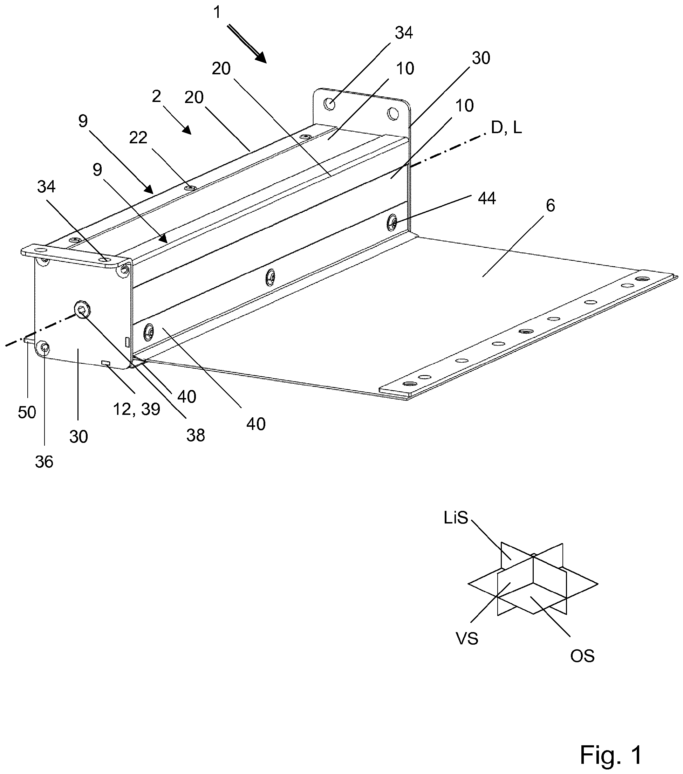

**Fig. 1** zeigt eine schematische, perspektivische Ansicht der Rollbandabdeckung 1 mit dem Gehäuse 2, wobei das Gehäuse 2 Seitenelemente 10 aufweist, die mittels Verbindungselementen 20 verbunden sind. Die Verbindungselemente 20 sind an Längskanten 9 des Gehäuses 2 angeordnet. Ferner weist das Gehäuse an seinen Stirnseiten Stirnelemente 30 auf. Die Seitenelemente 10, Verbindungselemente 20 und Längskanten 9 erstrecken sich im Wesentlichen parallel zu einer Längsrichtung L bzw. parallel zu einer Drehachse D einer in dem Gehäuse 2 befindlichen Wickelwelle 4 (nicht dargestellt) über die gesamte Länge der Seitenelemente 10.

Auf die Wickelwelle 4 ist ein Abdeckband 6 aufgewickelt. Dieses Abdeckband 6 ist in Fig. 1 teilweise zwischen zwei Abstreifern 40 an einer Längskante 9 aus dem Gehäuse 2 an einer Vorderseite VS herausgeführt dargestellt. Die Abstreifer 40 sind mittels Befestigungsmitteln 44 an den Seitenelementen 10 angebracht.

An den Stirnelementen 30 sind die Aussparungen 39 erkennbar in die die Ausformungen 12 der Seitenelemente 20 eingreifen. Ferner ist im zentralen Bereich der Stirnelemente 30 für eine erste, in Bezug auf Fig. 1, linke Seite LiS der Rollbandabdeckung 1 erkennbar, dass die Wickelwelle 4 mittels einer Abstützung 38 an den Stirnelementen 30 abgestützt ist. Die Stirnelemente 30 sind durch Befestigungsmittel 36 hier im Eckbereich der Stirnelemente 30 mit den Verbindungselementen 20 verbunden, sofern diese vorhanden sind.

Das Stirnelement 30 auf der ersten, bezogen auf Fig. 1, linken Seite LiS der Rollbandabdeckung 1 weist an einer Oberseite OS einen abgekanteten Bereich auf, der im Wesentlichen rechtwinklig nach außen von der Stirnseite absteht. An diesem abgekanteten Bereich sind Befestigungsmöglichkeiten 34 zur Montage des Gehäuses 2 an eine Maschine vorhanden. Das Stirnelement 30 auf einer zweiten, bezogen auf Fig. 1, rechten Seite ReS weist einen über das restliche Gehäuse 2 in Richtung einer Oberseite OS abstehenden Bereich auf, der ebenfalls eine Befestigungsmöglichkeit 34 hat. Außerdem erkennt man, dass auf einer Rückseite RS des Gehäuses 2 ein Montagewinkel 50 angeordnet ist.

Ferner erkennt man in Fig. 1, dass das Verbindungselement 20, das die Seitenelemente 10 einer Oberseite OS und einer Rückseite RS verbindet. Ferner erkennt man, dass ein Verbindungselement 20 an einer Oberseite OS mit einem Seitenelement 10 einer Oberseite OS durch Verbindungsmittel 22, insbesondere Nieten, verbunden ist.

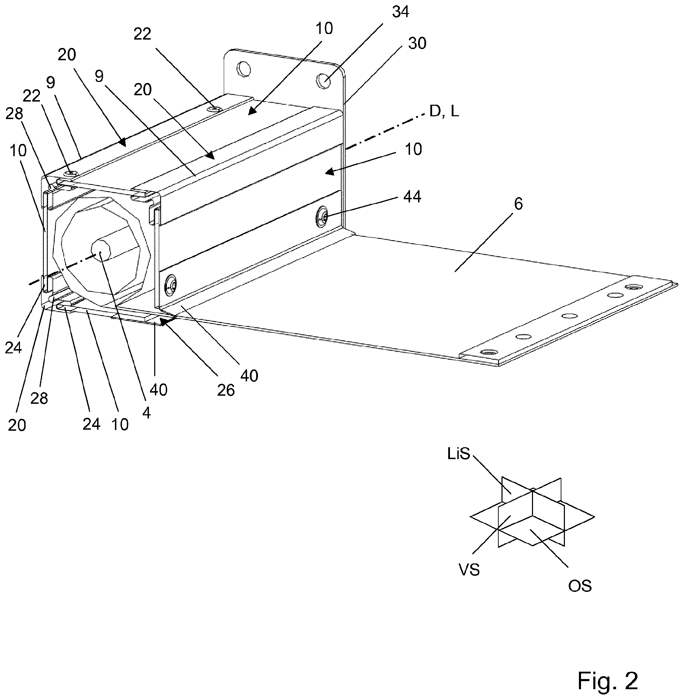

**Fig. 2** zeigt die schematische, perspektivische Ansicht der Rollbandabdeckung 1 nach Fig. 1 in einer geschnittenen Ansicht. Innerhalb des Gehäuses 2 erkennt man schematisch das Abdeckband 6 der Rollbandabdeckung 1, das auf die Wickelwelle 4 aufgewickelt ist und an dem Schlitz 26 zwischen den Abstreifern 40 herausgeführt ist.

Außerdem erkennt man, in dieser schematischen Schnittdarstellung, dass die Seitenelemente 10 in Aufnahmen 24 der Verbindungselemente 20 eingesetzt sind. Die Verbindungselemente 20 sind hierbei im Wesentlichen L-förmig ausgebildet, wobei die in die Aufnahmen 24 der Verbindungselemente 20 eingeschobenen Seitenelemente 10 einen im Wesentlichen rechten Winkel einschließen. Die Aufnahmen 24 der Verbindungselemente 20 sind als Nuten ausgebildet und ragen jeweils nur teilweise in einen der Schenkel des L-förmigen Verbindungselements 20 hinein.

Dementsprechend überragt das jeweilige Verbindungselement 20 das jeweilige Seitenelement 10 teilweise sowohl auf einer Innenseite als auch auf einer Außenseite über den Bereich, über den das Seitenelement 10 in das Verbindungselement 20 eingeschoben ist. Das jeweilige Seitenelement 10 wird entweder durch Formschluss und/oder Presspassung in dem Verbindungselement 20 gehalten.

Zusätzlich kann vorgesehen sein, dass die Seitenelemente 10 mit den Verbindungselementen 20 über Verbindungsmittel 22, die als Schrauben ausgebildet sind, verbunden sind. Diese Verbindungsmittel 22 durchragen sowohl das jeweilige Seitenelement 10, als auch das das Verbindungselement 20.

In dem Eckbereich des L-förmigen Verbindungselements 20 ist auf einer Innenseite, also auf der Seite des Verbindungselements 20, die innerhalb des Gehäuses 2 liegt, eine Ausnehmung 28 angeordnet. Die Ausnehmung 28 ist als Durchgangskanal ausgebildet. Die Ausnehmung 28 verläuft parallel zu der Längskante 9, bzw. der Längsachse L oder der Drehachse D über die gesamte Länge des Verbindungselements 20. In die Ausnehmung 28 des Verbindungselements 20 greifen Befestigungsmittel 36 zur Befestigung der Seitenelemente 10 ein. Für die restlichen bezeichneten Elemente wird auf die Beschreibung der übrigen Figuren verwiesen.

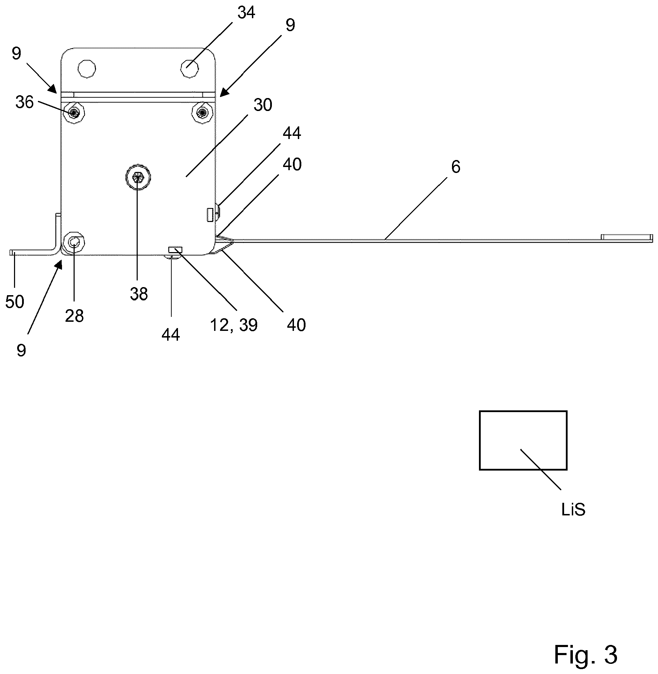

**Fig. 3** zeigt eine schematische Ansicht der ersten, bezogen auf Fig. 1, linken Seite LiS der Rollbandabdeckung 1. Auch hier ist erkennbar, dass das Abdeckband 6 an dem Schlitz 26 aus dem Gehäuse 2 herausgeführt ist. Ebenfalls wird in Figur 3 deutlich, dass die Ausformungen 12 der Seitenelemente 10 mit den Aussparungen 39 der Stirnelemente 30 in diesem Bereich des Schlitzes 26 in Eingriff sind.

Durch die Aussparungen 12 und Aussparungen 39 wird die Stabilität des Gehäuses 2 im Bereich des Schlitzes 26 erhöht. Im Bereich der übrigen Längskanten 9 weist das Gehäuse 2 an den Stirnelementen 30 Befestigungsmittel 39 auf, die mit den Verbindungselementen 20 (in Fig. 3 nicht dargestellt) in Eingriff bringbar sind. Auf diese Weise werden die Stirnelemente 30 an den die Wickelwelle 4 umragenden Seitenelementen 10 gehalten. Die Wickelwelle 4 ist im zentralen Bereich des Stirnelements 30 durch eine Abstützung 38 abgestützt. Für die restlichen mit Bezugszeichen versehenen Elemente wird auf die Beschreibung der übrigen Figuren verwiesen.

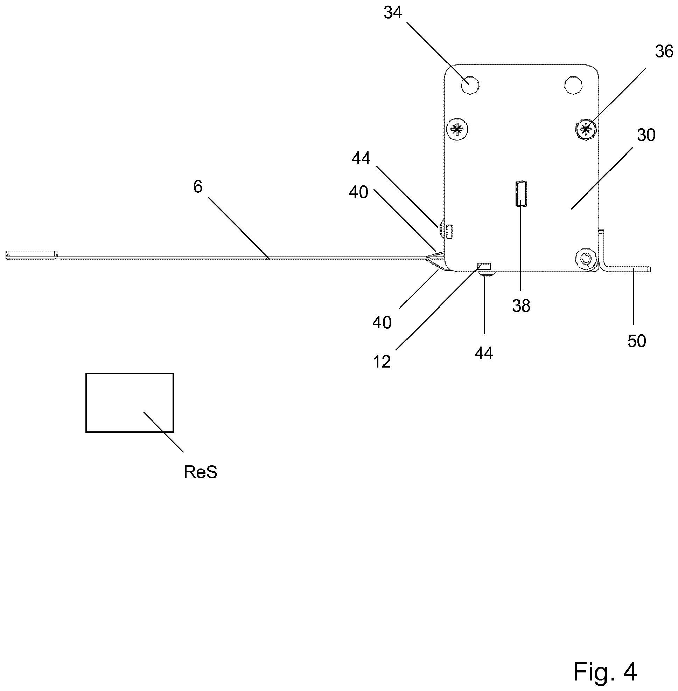

**Fig. 4** zeigt eine schematische Ansicht der zweiten, bezogen auf Fig. 1, rechten Seite ReS der Rollbandabdeckung 1. Die hier dargestellten Elemente entsprechen im Wesentlichen denen der ersten, bezogen auf Fig. 1, linken Seite LiS. Die Abstützung 38 der Wickelwelle 4 ist auf dieser Seite nicht kreisförmig, sondern hat eine kantige, rechteckige Form. Durch diese Form ist eine Aufnahme eines Drehmoments der Wickelwelle 4 über die Stirnseite 30 auf der zweiten, bezogen auf Fig. 1, rechten Seite ReS des Gehäuses 2 ermöglicht. Das Drehmoment kann über die mit den Befestigungsmitteln 36 mit den Verbindungselementen 20 verbundenen Seitenelemente 10 abgeleitet werden. Gleichzeitig werden Kräfte, die auf die Seitenelemente 10 wirken, über die Verbindungselemente 20 an die Stirnflächen 30 abgeleitet. Für die restlichen mit Bezugszeichen versehenen Elemente wird auf die Beschreibung der übrigen Figuren verwiesen.

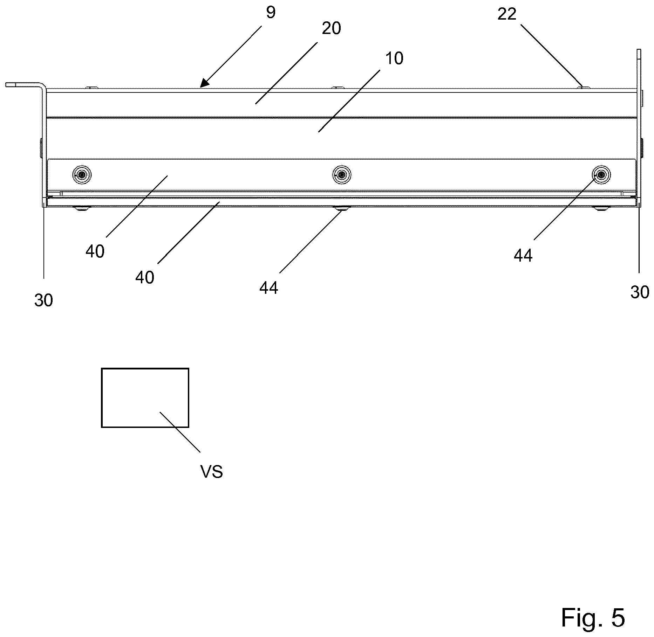

**Fig. 5** zeigt eine schematische Ansicht einer Vorderseite VS der Rollbandabdeckung 1. Hier erkennt man, das die Abstreifer 40 mittels Befestigungsmitteln 44 an den Seitenelementen 10 befestigt sind. Die Abstreifer 40 können alternativ auch mittels anderer Methoden, beispielsweise durch Verklebung oder durch Presspassung mit den Seitenelementen 10 verbunden sein. Insbesondere können die Abstreifer 40 eine Ausnehmung aufweisen, mit der die Seitenelemente 10 in Eingriff bringbar sind. Diese Ausnehmung kann ähnlich der Ausnehmung 28 der Verbindungselemente 20 ausgestaltet sein. In besonders vorteilhafter Weise werden die Abstreifer 40, ähnlich wie die Verbindungselemente 20 mittels Extrusionsverfahren hergestellt. Für die restlichen mit Bezugszeichen versehenen Elemente wird auf die Beschreibung der übrigen Figuren verwiesen.

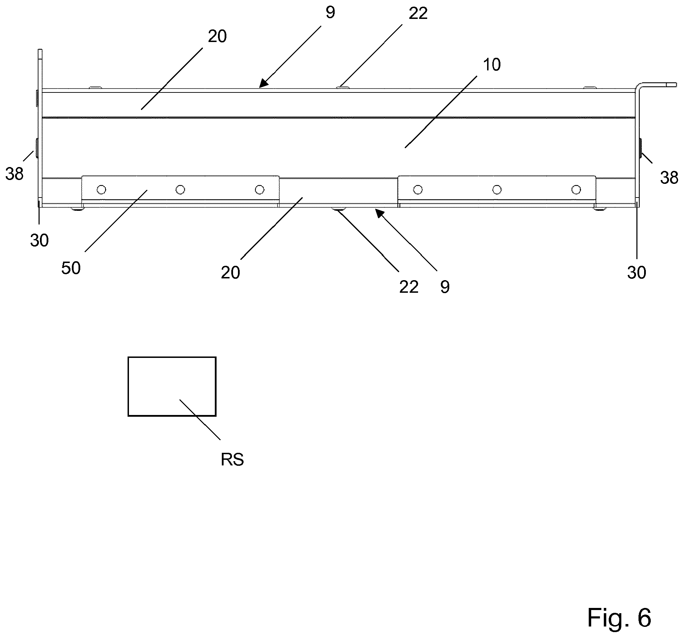

**Fig. 6** zeigt eine schematische Ansicht einer Rückseite RS der Rollbandabdeckung 1. An einer Rückseite RS sind Montagewinkel 50 an dem einer Unterseite US des Gehäuses zugewandten Verbindungselement 20 angeordnet. Für die restlichen mit Bezugszeichen versehenen Elemente wird auf die Beschreibung der übrigen Figuren verwiesen.

Die Erfindung ist nicht auf eine der vorbeschriebenen Ausführungsformen beschränkt, sondern in vielfältiger Weise abwandelbar.

Man erkennt, dass eine Rollbandabdeckung 1 zur Abdeckung eines Arbeitsraums einer Maschine verwendet wird. Die Abdeckung des Arbeitsraums erfolgt mittels eines Abdeckbands 6, das in der Rollbandabdeckung 1 auf einer innerhalb des Gehäuses 2 gelagerten Wickelwelle 4 aufgewickelt ist. Das Gehäuse 2 der Rollbandabdeckung 1 ist aus Seitenelementen 10, Verbindungselementen 20 und Stirnelementen 30 zusammengesetzt. Die Stirnelemente befinden sich an Stirnenden den Gehäuses 2. Die Seitenelemente 10 sind durch die Verbindungselemente 20 miteinander verbunden. Die Verbindungselemente 20 sind an den Längskanten 9 in Längsrichtung L des Gehäuses 2 parallel zu deiner Drehachse D der Wickelwelle angeordnet. Die Verbindungselemente weisen in Längsrichtung L eine durchgängige Querschnittsform auf und sind jeweils als separates leistenförmiges Teil ausgebildet.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Rollbandabdeckung
- 2: Gehäuse
- 4: Wickelwelle
- 6: Abdeckband
- 9: Längskante
- 10: Seitenelement
- 12: Ausformung
- 20: Verbindungselement
- 22: Verbindungsmittel
- 24: Aufnahme
- 26: Schlitz
- 28: Ausnehmung
- 30: Stirnelement
- 34: Befestigungsmöglichkeit
- 36: Befestigungsmittel
- 38: Abstützung
- 39: Aussparung
- 40: Abstreifer
- 44: Befestigungsmittel für Abstreifer
- 50: Montagewinkel
- D: Drehachse
- L: Längsrichtung
- LiS: erste Seite
- ReS: zweite Seite
- VS: Vorderseite
- OS: Oberseite
- US: Unterseite
- RS: Rückseite

## Patentansprüche

1. Rollbandabdeckung (1) zur schützenden Abdeckung eines Arbeitsraums einer Maschine, aufweisend ein Gehäuse (2), das eine um eine Drehachse (D) gelagerte Wickelwelle (4) mit einem auf der Wickelwelle (4) aufgewickelten Abdeckband (6) einhaust, wobei das Gehäuse (2) mindestens zwei Seitenelemente (10) aufweist, die parallel zu der Drehachse (D) verlaufen und das Gehäuse (2) in Längsrichtung (L) an einem ersten Ende und an einem zweiten Ende der Wickelwelle (4) jeweils ein Stirnelement (30) aufweist, wobei die Seitenelemente (10) durch mindestens ein Verbindungselement (20) verbunden sind, wobei das Verbindungselement (20) über die gesamte Länge der Seitenelemente (10) verläuft, als separates leistenförmiges Teil ausgebildet ist und in Längsrichtung (L) eine durchgängige Querschnittsform aufweist, wobei das mindestens eine Verbindungselement (20) jeweils an einer Längskante (9) des Gehäuses (2) angeordnet ist, die in Längsrichtung (L) verläuft **dadurch gekennzeichnet, dass** die Wickelwelle (4) stirnseitig an den Stirnelementen (30) abgestützt ist und das mindestens eine Verbindungselement (20) jeweils an dem Stirnelement (30) eine Ausnehmung (28) zur Aufnahme eines Befestigungsmittels (36) aufweist und das jeweilige Stirnelement (30) an dem jeweiligen Verbindungselement (20) durch das Befestigungsmittel (36) festlegbar ist, wobei die Ausnehmung (28) als Durchgangskanal ausgebildet ist, in den die als Schrauben ausgebildeten Befestigungsmittel (36) von dem Stirnelement (30) aus axial in den Durchgangskanal eingeschraubt sind.

2. Rollbandabdeckung (1) nach Anspruch 1, **dadurch gekennzeichnet, dass** das Verbindungselement (20) zwei Aufnahmen (24) für die Seitenelemente (10) aufweist.

3. Rollbandabdeckung (1) nach Anspruch 2, **dadurch gekennzeichnet, dass** das die Aufnahmen (24) als Vertiefungen ausgebildet sind.

4. Rollbandabdeckung (1) nach einem der vorhergehenden Ansprüche, **dadurch gekennzeichnet, dass** die Seitenelemente (10) Profile und/oder Platten sind.

5. Rollbandabdeckung (1) nach einem der vorhergehenden Ansprüche, **dadurch gekennzeichnet, dass** die Stirnelemente (30) Platten sind.

6. Rollbandabdeckung (1) nach einem der vorhergehenden Ansprüche, **dadurch gekennzeichnet, dass** an zumindest einer in Längsrichtung (L) des Gehäuses (2) verlaufenden Längskante (9) kein Verbindungselement (20) vorgesehen ist, wodurch an dieser Längskante (9) ein Schlitz (26) zur Durchführung eines Abdeckbands (6) ausgebildet ist

7. Rollbandabdeckung (1) nach Anspruch 6, **dadurch gekennzeichnet, dass** an zumindest einem dem Schlitz (26) benachbarten Seitenelement (10) ein Abstreifer (40) angebracht ist.

8. Rollbandabdeckung (1) nach einem der Ansprüche 6 bis 7 der vorhergehenden Ansprüche, **dadurch gekennzeichnet, dass** das Abdeckband (6) als Behang ausgebildet ist.

9. Rollbandabdeckung (1) nach einem der Ansprüche 6 bis 8, **dadurch gekennzeichnet, dass** das Abdeckband (6) Gliederelemente aufweist.

10. Rollbandabdeckung (1) nach einem der vorhergehenden Ansprüche, **dadurch gekennzeichnet, dass** zumindest ein Seitenelement (10) mit zumindest einem Verbindungselement (20) durch mindestens ein Verbindungsmittel (22) verbunden ist.

11. Rollbandabdeckung (1) nach einem der vorhergehenden Ansprüche, **dadurch gekennzeichnet, dass** die mindestens zwei Seitenelemente (10) stirnseitig Ausformungen (12) aufweisen, die mit Aussparungen (39) in den Stirnelementen (30) korrespondieren.

12. Verfahren zur Herstellung einer Rollbandabdeckung (1) mit einem Gehäuse (2) nach einem der vorhergehenden Ansprüche, **wobei**
• die mindestens zwei Seitenelemente (10) und das mindestens eine Verbindungselement (20) auf eine gewünschte Länge der Rollbandabdeckung gebracht werden,
• die Seitenelemente (10) mit dem Verbindungselement (20) in Eingriff gebracht werden,
• die Stirnelemente (30) jeweils mit dem Verbindungselement (20) verbunden werden, **dadurch gekennzeichnet, dass** die Wickelwelle (4) stirnseitig an den Stirnelementen (30) abgestützt und Schrauben (36) durch Öffnungen in den Seitenelementen (10) in eine als Durchgangskanal ausgebildete Ausnehmung (28) axial eingeschraubt werden.

## Claims

1. Roller tape cover (1) for the protective coverage of a working space of a machine, having a housing (2) which houses a winding shaft (4), mounted about a rotation axis (D), having a cover tape (6) wound on the winding shaft (4), wherein the housing (2) has at least two side elements (10) which extend parallel to the rotation axis (D) and the housing (2) has in longitudinal direction (L) at a first end and at a second end of the winding shaft (4) in each case an end face element (30), wherein the side elements (10) are connected by means of at least one connecting element (20), wherein the connecting element (20) extends across the entire length of the side elements (10), is formed as a separate, strip-shaped part, and has a continuous cross-sectional shape in longitudinal direction (L), wherein the at least one connecting element (20) is arranged in each case against a longitudinal edge (9) of the housing (2), which longitudinal edge extends in longitudinal direction (L), **characterized in that** the winding shaft (4) is supported at the end face at the end face elements (30) and the at least one connecting element (20) has in each case at the end face element (30) a cutout (28) for receiving a fastening means (36) and the respective end face element (30) can be fixed at the respective connecting element (20) by means of the fastening means (36), wherein the cutout (28) is in the form of a continuous channel, into which the fastening means (36) in the form of screws are screwed in from the end face element (30) axially into the continuous channel.

2. Roller tape cover (1) according to claim 1, **characterized in that** the connecting element (20) has two receptacles (24) for the side elements (10).

3. Roller tape cover (1) according to claim 2, **characterized in that** the receptacles (24) are in the form of indentations.

4. Roller tape cover (1) according to any of the preceding claims, **characterized in that** the side elements (10) are profiles and/or plates.

5. Roller tape cover (1) according to any of the preceding claims, **characterized in that** the end face elements (30) are plates.

6. Roller tape cover (1) according to any of the preceding claims, **characterized in that** at at least one longitudinal edge (9) extending in longitudinal direction (L) of the housing (2), no connecting element (20) is provided, as a result of which a slot (26) for the passage of a cover tape (6) is formed at this longitudinal edge (9).

7. Roller tape cover (1) according to claim 6, **characterized in that** at at least one side element (10) adjacent to the slot (26), a scraper (40) is mounted.

8. Roller tape cover (1) according to any of claims 6 to 7 of the preceding claims, **characterized in that** the cover tape (6) is in the form of a blind.

9. Roller tape cover (1) according to any of claims 6 to 8, **characterized in that** the cover tape (6) has sectional elements.

10. Roller tape cover (1) according to any of the preceding claims, **characterized in that** at least one side element (10) is connected with at least one connecting element (20) by means of at least one connecting means (22).

11. Roller tape cover (1) according to any of the preceding claims, **characterized in that** the at least two side elements (10) have formations (12) on the end face which correspond with indentations (39) in the end face elements (30).

12. Method for producing a roller tape cover (1) having a housing (2) according to any of the preceding claims, **wherein**
the at least two side elements (10) and the at least one connecting element (20) are brought to a desired length of the roller tape cover,
the side elements (10) are brought into engagement with the connecting element (20),
the end face elements (30) are each connected to the connecting element (20), **characterized in that** the winding shaft (4) rests at the end face on the end face elements (30) and screws (36) are screwed in axially through openings in the side elements (10) into a cutout (28) in the form of a continuous channel.

## Revendications

1. Couverture de bande roulante (1) pour le recouvrement de protection d'un espace de travail d'une machine, présentant un boîtier (2), qui abrite un arbre d'enroulement (4) monté autour d'un axe de rotation (D) avec une bande de recouvrement (6) enroulée sur l'arbre d'enroulement (4), dans laquelle le boîtier (2) présente au moins deux éléments latéraux (10), qui s'étendent parallèlement à l'axe de rotation (D) et le boîtier (2) présente dans la direction longitudinale (L) sur une première extrémité et sur une seconde extrémité de l'arbre d'enroulement (4) respectivement un élément frontal (30), dans laquelle les éléments latéraux (10) sont reliés par au moins un élément de raccordement (20), dans laquelle l'élément de raccordement (20) s'étend sur toute la longueur des éléments latéraux (10), est conçu comme une pièce séparée en forme de tige et présente dans la direction longitudinale (L) une forme de section transversale continue, dans laquelle le au moins un élément de raccordement (20) est disposé respectivement au niveau d'une arête longitudinale (9) du boîtier (2), qui s'étend dans la direction longitudinale (L) **caractérisée en ce que** l'arbre d'enroulement (4) est soutenu à l'avant au niveau des éléments frontaux (30) et **en ce que** le au moins un élément de raccordement (20) présente respectivement au niveau de l'élément frontal (30) un évidement (28) pour la réception d'un moyen de fixation (36) et **en ce que** l'élément frontal (30) respectif peut être fixé au niveau de l'élément de raccordement (20) respectif par le moyen de fixation (36), dans laquelle l'évidement (28) est conçu comme un canal de passage, dans lequel les moyens de fixation (36) conçus comme des vis sont vissés axialement dans le canal de passage depuis l'élément frontal (30).

2. Couverture de bande roulante (1) selon la revendication 1, **caractérisée en ce que** l'élément de raccordement (20) présente deux logements (24) pour les éléments latéraux (10).

3. Couverture de bande roulante (1) selon la revendication 2, **caractérisée en ce que** les logements (24) sont conçus comme des cavités.

4. Couverture de bande roulante (1) selon l'une quelconque des revendications précédentes, **caractérisée en ce que** les éléments latéraux (10) sont des profilés et/ou des plaques.

5. Couverture de bande roulante (1) selon l'une quelconque des revendications précédentes, **caractérisée en ce que** les éléments frontaux (30) sont des plaques.

6. Couverture de bande roulante (1) selon l'une quelconque des revendications précédentes, **caractérisée en ce qu'**aucun élément de raccordement (20) n'est prévu sur au moins une arête longitudinale (9) s'étendant dans une direction longitudinale (L) du boîtier (2), selon laquelle une fente (26) est conçue sur ladite arête longitudinale (9) pour la réalisation d'une bande de recouvrement (6).

7. Couverture de bande roulante (1) selon la revendication 6, **caractérisée en ce qu'**un racloir (40) est monté sur au moins un élément latéral (10) adjacent à la fente (26).

8. Couverture de bande roulante (1) selon l'une quelconque des revendications 6 à 7 des revendications précédentes, **caractérisée en ce que** la bande de recouvrement (6) est conçue comme un rideau.

9. Couverture de bande roulante (1) selon l'une quelconque des revendications 6 à 8, **caractérisée en ce que** la bande de recouvrement (6) présente des éléments-maillons.

10. Couverture de bande roulante (1) selon l'une quelconque des revendications précédentes, **caractérisée en ce que** au moins un élément latéral (10) est relié à au moins un élément de raccordement (20) par au moins un élément de raccordement (22).

11. Couverture de bande roulante (1) selon l'une quelconque des revendications précédentes, **caractérisée en ce que** les au moins deux éléments latéraux (10) présentent à l'avant des façonnements (12) qui correspondent à des évidements (39) dans les éléments frontaux (30).

12. Procédé de fabrication d'une couverture de bande roulante (1) avec un boîtier (2) selon l'une quelconque des revendications précédentes, **dans lequel**
- les au moins deux éléments latéraux (10) et le au moins un élément de raccordement (20) sont amenés à une longueur souhaitée de la couverture de bande roulante,
- les éléments latéraux (10) sont mis en prise avec l'élément de raccordement (20),
- les éléments frontaux (30) sont reliés respectivement à l'élément de raccordement (20), **caractérisé en ce que** l'arbre d'enroulement (4) à l'avant est soutenu au niveau des éléments frontaux (30) et des vis (36) sont vissées axialement par des ouvertures dans les éléments latéraux (10) dans un évidement (28) conçu comme un canal de passage.
